# EUROPEAN PATENT APPLICATION

(11) **EP 4 759 586 A1**
(43) Date of publication of application: **17.06.2026**
(21) Application number: 25216589.9
(22) Date of filing: 18.11.2025
(51) Int. Cl.: B60K 1/00, B60K 5/12

(54) **ELECTRIC VEHICLE**

(30) Priority: 11.12.2024 JP 2024216884
(71) Applicant: Suzuki Motor Corporation, Shizuoka 432-8611 (JP)
(72) Inventor: NARA, Tomonobu, HAMAMATSU-SHI, 432-8611 (JP); NITAWAKI, Kunihiro, HAMAMATSU-SHI, 432-8611 (JP); OUCHI, Kosuke, HAMAMATSU-SHI, 432-8611 (JP)
(74) Representative: Plasseraud IP

(57) **Abstract**

[Problem to be Solved]

To provide an electric vehicle (1) that can improve the fastening stiffness of a split case (40) of a driving device (30) and reduce vibration of the case.

[Solution]

A high-voltage component (16) is disposed on a front surface of the driving device (30), the driving device (30) includes the split case (40) including a first case (41), a second case (42), a third case (43), and a fourth case (44) fastened to each other while being arranged side by side from one side to one another in a vehicle width direction, a rear bracket (12) is fastened to a rear surface of the first case (41) and a rear surface of the third case (43), and the high-voltage component (16) is fastened to a front surface of the second case (42) and a front surface of the fourth case (44).

## Description

### [Technical Field]

The present invention relates to an electric vehicle.

### [Background Art]

Patent Literature 1 (JP2023-136720A) describes a driving device in which a plurality of units, such as a driving motor and a speed reducer, are connected in series. The driving device includes a split case in which a plurality of cases are fastened in the vehicle width direction.

### [Citation List]

### [Patent Literature]

[Patent Literature 1] JP2023-136720A

### [Summary of Invention]

### [Technical Problem]

However, the driving device described in Patent Literature 1 has a problem that the case vibrates due to vibration generated in an actuator, such as an internal motor, or vibration transmitted from the outside.

In view of the foregoing, the present invention aims to provide an electric vehicle that can improve the fastening stiffness of a split case of a driving device and reduce vibration of the case.

### [Solution to Problem]

To solve the above problem, the present invention provides an electric vehicle including: a driving device disposed in an engine compartment formed in a front portion of the vehicle, the driving device being configured to generate a motor torque for traveling; and a bracket fixed to a rear surface of the driving device and supporting the driving device to a vehicle body, characterized in that: a high-voltage component is disposed on a front surface of the driving device; the driving device includes a split case, the split case including a first case, a second case, a third case, and a fourth case fastened to one another while being arranged side by side from one side to the other in a vehicle width direction; the bracket is fastened to a rear surface of the first case and a rear surface of the third case; and the high-voltage component is fastened to a front surface of the second case and a front surface of the fourth case.

### [Advantageous Effect of Invention]

As described above, according to the present invention, it is possible to provide an electric vehicle that can improve the fastening stiffness of a split case of a driving device and reduce vibration of the case.

### [Brief Description of Drawings]

[Figure 1] Figure 1 is a plan view of a driving device of an electric vehicle according to an example of the present invention.
[Figure 2] Figure 2 is a back view of the driving device of the electric vehicle according to the example of the present invention.
[Figure 3] Figure 3 is a right side view of the driving device of the electric vehicle according to the example of the present invention.
[Figure 4] Figure 4 is a front view of the driving device of the electric vehicle according to the example of the present invention.
[Figure 5] Figure 5 is a cross-sectional view taken along arrows V, V of the electric vehicle illustrated in Figure 3.

### [Description of Embodiment]

An electric vehicle according to an embodiment of the present invention is an electric vehicle including: a driving device disposed in an engine compartment formed in a front portion of the vehicle, the driving device being configured to generate a motor torque for traveling; and a bracket fixed to a rear surface of the driving device and supporting the driving device to a vehicle body, characterized in that: a high-voltage component is disposed on a front surface of the driving device; the driving device includes a split case, the split case including a first case, a second case, a third case, and a fourth case fastened to one another while being arranged side by side from one side to the other in a vehicle width direction; the bracket is fastened to a rear surface of the first case and a rear surface of the third case; and the high-voltage component is fastened to a front surface of the second case and a front surface of the fourth case. With this configuration, the electric vehicle according to the embodiment of the present invention can improve the fastening stiffness of a split case of a driving device and reduce vibration of the case.

### [Example]

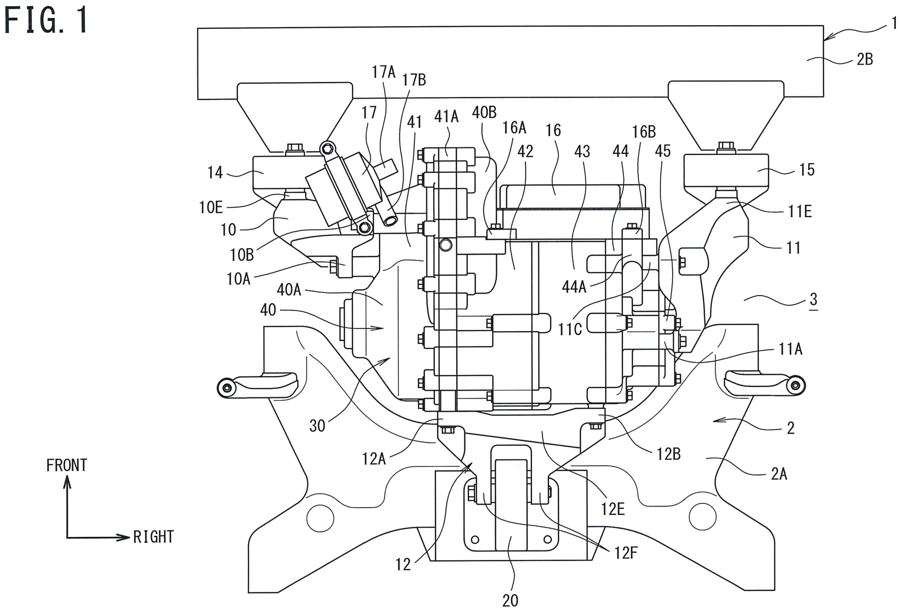

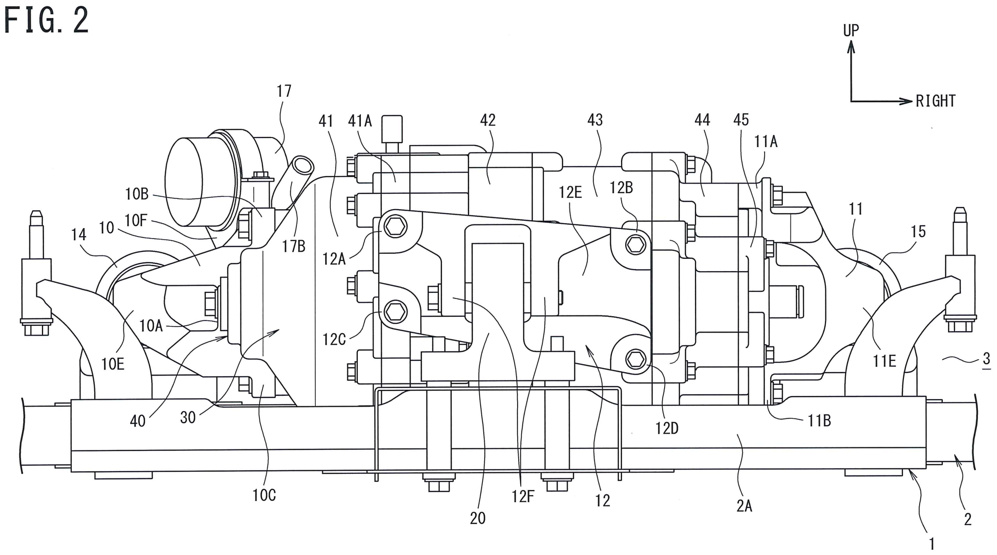

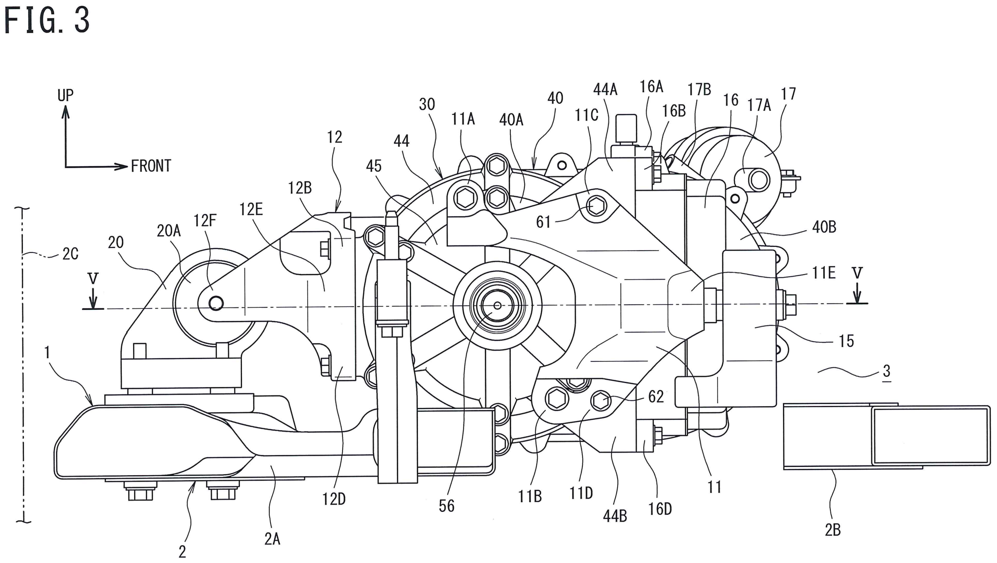

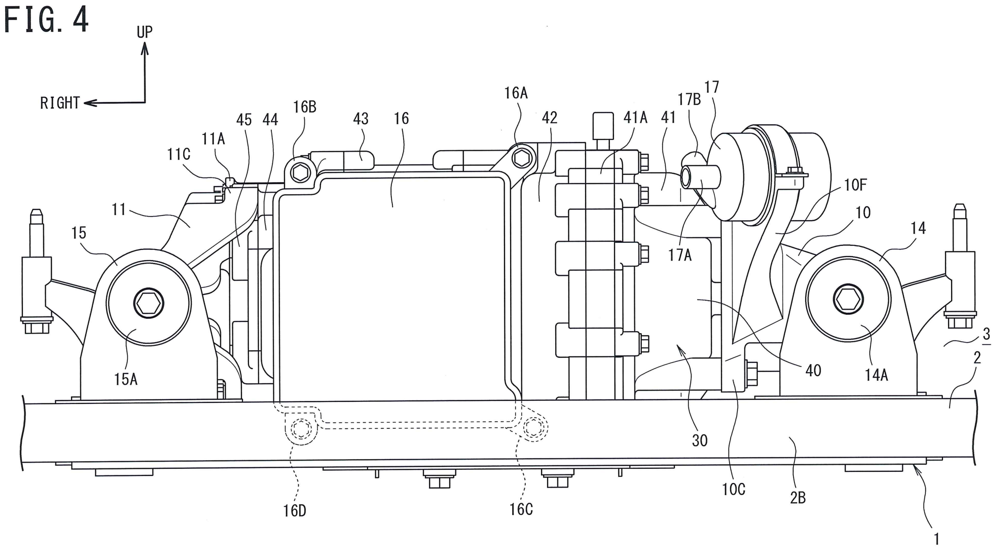

Hereinafter, an electric vehicle according to an example of the present invention will be described with reference to the drawings. Figures 1 to 5 are diagrams illustrating the electric vehicle according to the example of the present invention.

In Figures 1 to 5, the upper, lower, front, rear, left, and right directions are based on an electric vehicle when a component is disposed in the vehicle, and a front-rear direction refers to the front-rear direction of the vehicle, a left-right direction refers to the left-right direction of the vehicle (vehicle width direction), and an up-down direction refers to the up-down direction of the vehicle (height direction of the vehicle).

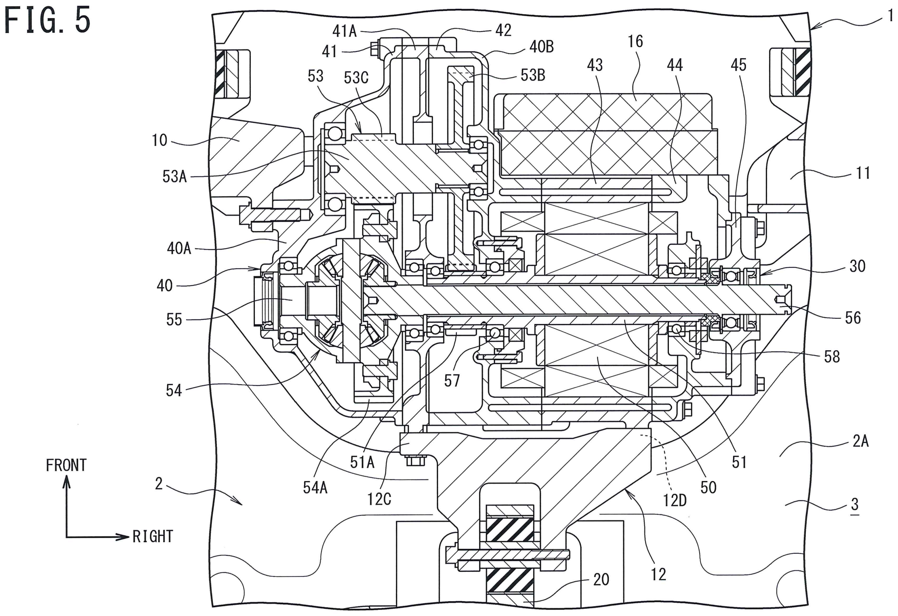

As illustrated in Figure 1, a driving device 3 that generates a motor torque for traveling is provided in an engine compartment 3 in a front portion of a vehicle 1. The driving device 30 is disposed horizontally in the engine compartment 3 such that its internal motor output shaft 51 (see Figure 5) extends in the vehicle width direction. The vehicle 1 of the present example forms an electric vehicle.

Driving wheels (not illustrated) are disposed on the left and right of the driving device 30, and rotation output from the driving device 30 is transmitted to the driving wheels. The vehicle 1 includes a vehicle body 2, and the vehicle body 2 includes a subframe 2A and a vehicle body member 2B. The subframe 2A and the vehicle body member 2B form a bottom portion of the vehicle body 2 and support the driving device 30. The subframe 2A supports a rear portion of the driving device 30, a lower arm (not illustrated), and other components. The vehicle body member 2B supports vehicle widthwise end portions and other components of the driving device 30.

As illustrated in Figure 5, the driving device 30 includes a motor 50, a deceleration mechanism 53, a differential device 54, and a split case 40 as a housing accommodating these components.

The case 40 includes a first case 41 forming a left end portion of the driving device 30, a second case 42 fastened to a right end portion of the first case 41, a third case 43 fastened to a right end portion of the second case 42, a fourth case 44 connected to a right end portion of the third case 43, and a cover member 45 fastened to a right end portion of the fourth case 44.

The first case 41 includes a partition wall member 41A in its right end portion. The partition wall member 41A extends in the front-rear direction and up-down direction to partition an internal space of the first case 41 from an internal space on the second case 42 side. The partition wall member 41Arotatably supports a left end portion of the motor output shaft 51 of the motor 50 and a right end portion of the differential device 54, and allows a deceleration shaft 53A of the deceleration mechanism 53 to pass therethrough.

The motor 50 is disposed in the third case 43. The hollow motor output shaft 51 for outputting a motor torque is provided at the center of the motor 50. The motor output shaft 51 extends in the vehicle width direction from the inside of the second case 42 to the inside of the fourth case 44.

The second case 42 is provided with a bearing 57 that pivotally supports a part of the motor output shaft 51 on the left side of the motor 50 in a freely rotatable manner. The fourth case 44 is provided with a bearing 58 that pivotally supports a part of the motor output shaft 51 on the right side of the motor 50 in a freely rotatable manner.

The deceleration mechanism 53 that decelerates the rotation transmitted from the motor 50 and the differential device 54 that transmits the rotation decelerated by the deceleration mechanism 53 to left and right drive shafts 55, 56 in a differentially rotatable manner are disposed in the first case 41 and the second case 42.

The differential device 54 is disposed on the left side of the left end portion of the motor output shaft 51. The differential device 54 includes a ring gear 54A to which rotation is transmitted from the deceleration mechanism 53. The left drive shaft 55 is connected to a left end portion of the differential device 54. The right drive shaft 56 is connected to a right end portion of the differential device 54. The drive shaft 56 is coaxially disposed inside the hollow motor output shaft 51.

The deceleration mechanism 53 includes the deceleration shaft 53A and a large-diameter first deceleration gear 53B and a small-diameter second deceleration gear 53C provided on the deceleration shaft 53A. The deceleration shaft 53A is disposed parallel to the motor output shaft 51 in front of the differential device 54. The first deceleration gear 53B meshes with a gear 51A on the motor output shaft 51, and the second deceleration gear 53C meshes with the ring gear 54A of the differential device 54.

The case 40 includes a cylindrical cylinder portion 40A having a near-perfect circular cross section and extending in the vehicle width direction, and a bulged portion 40B bulging frontward from a left end portion of the cylinder portion 40A. The cylinder portion 40A is a part that accommodates the motor 50, the motor output shaft 51, and the differential device 54. The bulged portion 40B is a part that accommodates the deceleration mechanism 53. Here, the case 40 has an elliptical shape combining the cylinder portion 40A and the bulged portion 40B in left side view, and has an L shape in which the cylinder portion 40A intersects the bulged portion 40B in plan view.

As illustrated in Figures 1 to 4, a left front bracket 10 for supporting the driving device 30 to the vehicle body 2 is fixed to a left end portion of the driving device 30, and a mount insulator 14 is connected to a front end portion 10E of the left front bracket 10. The mount insulator 14 is fixed to the vehicle body member 2B.

An elastic member 14A such as a mounting rubber is provided inside the mount insulator 14, and the left front bracket 10 and the mount insulator 14 are elastically connected via the elastic member 14A. Accordingly, the left end portion of the driving device 30 is elastically supported to the vehicle body member 2B via the left front bracket 10 and the mount insulator 14.

The left front bracket 10 includes three fastening portions 10A, 10B, 10C fastened to a left end portion of the first case 41. The fastening portion 10A is disposed in a position in front of the central position of the driving device 30 (axis position of motor output shaft 51) in the left end portion of the first case 41 and at the front end of the cylinder portion 40A. The fastening portion 10B is disposed in a position in front of and above the fastening portion 10A. The fastening portion 10C is disposed in a position in front of and below the fastening portion 10A.

A right front bracket 11 for supporting the driving device 30 to the vehicle body 2 is fixed to a right end portion of the driving device 30, and a mount insulator 15 is connected to a front end portion 11E of the right front bracket 11. The mount insulator 15 is fixed to the vehicle body member 2B.

An elastic member 15A such as a mounting rubber is provided inside the mount insulator 15, and the right front bracket 11 and the mount insulator 15 are elastically connected via the elastic member 15A. Accordingly, the right end portion of the driving device 30 is elastically supported to the vehicle body member 2B via the right front bracket 11 and the mount insulator 15.

The right front bracket 11 includes four fastening portions 11A, 11B, 11C, 11D fastened to a right end portion of the fourth case 44. The fastening portion 11A is fastened to the right end portion of the fourth case 44 in a position behind and above the center of the driving device 30. The fastening portion 11B is fastened to the right end portion of the fourth case 44 in a position in front of and below the center of the driving device 30.

An upper support portion 44A to which an upper portion of the right front bracket 11 and an upper portion of a high-voltage component 16 are fixed is formed in an upper portion of a front surface of the fourth case 44. The upper support portion 44A extends toward the vehicle front and vehicle upper side from a front surface of an outer peripheral portion of the fourth case 44. A front end surface of the upper support portion 44A forms a flat surface extending in the up-down direction.

A lower support portion 44B to which a lower portion of the right front bracket 11 and a lower portion of the high-voltage component 16 are fixed is formed in a lower portion of the front surface of the fourth case 44. The lower support portion 44B extends toward the vehicle front and vehicle lower side from the front surface of the outer peripheral portion of the fourth case 44. A front end surface of the lower support portion 44B forms a flat surface extending in the up-down direction.

The fastening portion 11C is fastened to a right end portion of the upper support portion 44A of the fourth case 44 in a position in front of and above the center of the driving device 30. The fastening portion 11D is fastened to a right end portion of the lower support portion 44B of the fourth case 44 in a position in front of and below the center of the driving device 30.

A rear bracket 12 for supporting the driving device 30 to the vehicle body 2 is fixed to a vehicle widthwise central portion of a rear surface of the driving device 30. The rear bracket 12 includes a main body portion 12E fastened to the driving device 30, and two vehicle body side-connection portions 12F extending rearward from the main body portion 12E. A dash panel 2C is provided behind the rear bracket 12, and the dash panel 2C partitions the engine compartment 3 from the vehicle interior (not illustrated) behind the engine compartment 3.

The main body portion 12E is formed into a substantially box shape having the long side in the vehicle width direction in plan view and back view. A mount insulator 20 is connected to a rear end portion of the vehicle body side-connection portion 12F. The mount insulator 20 is fixed to the subframe 2A.

An elastic member 20A such as a mounting rubber is provided inside the mount insulator 20, and the rear bracket 12 and the mount insulator 20 are elastically connected via the elastic member 20A. Accordingly, the rear surface of the driving device 30 is elastically supported to the subframe 2A via the rear bracket 12 and the mount insulator 20.

The main body portion 12E includes four fastening portions 12A, 12B, 12C, 12D fastened to the case 40. The fastening portion 12A is provided in an upper left corner of the main body portion 12E and fastened to a rear surface of the partition wall member 41A of the first case 41. The fastening portion 12B is provided in an upper right corner of the main body portion 12E and fastened to a rear surface of the third case 43.

The fastening portion 12C is provided in a lower left corner of the main body portion 12E and fastened to the rear surface of the partition wall member 41A of the first case 41. The fastening portion 12D is provided in a lower right corner of the main body portion 12E and fastened to the rear surface of the third case 43.

The high-voltage component 16 is fixed to a position closer to a vehicle widthwise right end portion on a front surface of the driving device 30. The high-voltage component 16 includes an inverter that converts electricity of a battery (not illustrated) into a predetermined voltage and frequency and supplies it to the motor 50. The high-voltage component 16 is formed into a substantially square box shape in front view. The high-voltage component 16 includes four fastening portions 16A, 16B, 16C, 16D fastened to the case 40.

The fastening portion 16A is provided in an upper left corner of the high-voltage component 16 and fastened to an upper portion of a front surface of the second case 42. The fastening portion 16C is provided in a lower left corner of the high-voltage component 16 and fastened to a lower portion of the front surface of the second case 42.

The fastening portion 16B is provided in an upper right corner of the high-voltage component 16 and fastened to a front end portion of the upper support portion 44A on the front surface of the fourth case 44. The fastening portion 16D is provided in a lower right corner of the high-voltage component 16 and fastened to a front end portion of the lower support portion 44B on the front surface of the fourth case 44.

An electric water pump 17 is disposed in front of the left end portion of the driving device 30 and above the left front bracket 10. The water pump 17 pumps out a coolant cooled by a radiator (not illustrated) to the driving device 30. The water pump 17 includes a coolant inlet pipe 17A that sucks in the coolant and a coolant outlet pipe 17B that extends in a direction perpendicular to the coolant inlet pipe 17A and pumps out the coolant. A support portion 10F for supporting the water pump 17 from below is formed integrally with the left front bracket 10 in an upper portion of the left front bracket 10.

The rear bracket 12 is fastened to a rear surface of the first case 41 and a rear surface of the third case 43. In addition, the high-voltage component 16 is fastened to a front surface of the second case 42 and a front surface of the fourth case 44. The rear bracket 12 forms a bracket of the present invention.

The rear bracket 12 includes the fastening portion 12A as a first case-upper fastening portion fastened to an upper portion of the rear surface of the first case 41, the fastening portion 12C as a first case-lower fastening portion fastened to a lower portion of the rear surface of the first case 41, the fastening portion 12B as a third case-upper fastening portion fastened to an upper portion of the rear surface of the third case 43, and the fastening portion 12D as a third case-lower fastening portion fastened to a lower portion of the rear surface of the third case 43.

The high-voltage component 16 includes the fastening portion 16A as a second case-upper fastening portion fastened to an upper portion of the front surface of the second case 42, the fastening portion 16C as a second case-lower fastening portion fastened to a lower portion of the front surface of the second case 42, the fastening portion 16B as a fourth case-upper fastening portion fastened to an upper portion of the front surface of the fourth case 44, and the fastening portion 16D as a fourth case-lower fastening portion fastened to a lower portion of the front surface of the fourth case 44.

The fastening portion 16A as the second case-upper fastening portion and the fastening portion 16B as the fourth case-upper fastening portion are disposed in positions higher than the fastening portion 12A as the first case-upper fastening portion and the fastening portion 12B as the third case-upper fastening portion.

The fastening portion 16C as the second case-lower fastening portion and the fastening portion 16D as the fourth case-lower fastening portion are disposed in positions lower than the fastening portion 12C as the first case-lower fastening portion and the fastening portion 12D as the third case-lower fastening portion.

The high-voltage component 16 and the rear bracket 12 are disposed in positions lower than the upper end of the driving device 30 to face each other in the front-rear direction with the driving device 30 interposed therebetween.

As described above, in the present example, the high-voltage component 16 is disposed on the front surface of the driving device 30, the driving device 30 includes the split case 40 including the first case 41, the second case 42, the third case 43, and the fourth case 44 fastened to one another while being arranged side by side from one side to the other in the vehicle width direction, the rear bracket 12 is fastened to the rear surface of the first case 41 and the rear surface of the third case 43, and the high-voltage component 16 is fastened to the front surface of the second case 42 and the front surface of the fourth case 44.

With this configuration, it is possible to firmly fasten the first case 41 and the third case 43 indirectly via the rear bracket 12 in addition to the direct fastening part between the end surfaces. Hence, the rear bracket 12 can function as a reinforcement member. Moreover, it is possible to firmly fasten the second case 42 and the fourth case 44 indirectly via the high-voltage component 16 in addition to the direct fastening part between the end surfaces. Hence, the high-voltage component 16 can function as a reinforcement member. Additionally, since the rear bracket 12 and the high-voltage component 16 function as reinforcement members, the fastening stiffness of the case 40 can be ensured even when the number of direct fastening parts among the end surfaces of the first case 41, the second case 42, the third case 43, and the fourth case 44 of the split case 40 is reduced, and vibration of the case 40 due to vibration of the motor 50 can be reduced. As a result, it is possible to improve the fastening stiffness of the split case 40 of the driving device 30 and reduce vibration of the case 40.

Additionally, in the present example, the case 40 accommodates the motor 50 and the motor output shaft 51 extending in the vehicle width direction and outputting a motor torque of the motor 50, and the second case 42 and the fourth case 44 are provided with the bearings 57, 58 supporting the motor output shaft 51 in a freely rotatable manner.

With this configuration, since the high-voltage component 16 is fastened to the second case 42 and the fourth case 44 provided with the bearings 57, 58 easily affected by the vibration of the motor output shaft 51 of the motor 50, the vibration of the motor 50 can be attenuated by the weight of the high-voltage component 16 and vibration of the case 40 can be reduced. Moreover, even if one of the high-voltage component 16 or the rear bracket 12 resonates with the vibration of the motor 50, the other member can reduce the vibration, whereby the vibration of the case 40 can be reduced.

Additionally, in the present example, the rear bracket 12 includes the fastening portion 12A as the first case-upper fastening portion fastened to the upper portion of the rear surface of the first case 41, the fastening portion 12C as the first case-lower fastening portion fastened to the lower portion of the rear surface of the first case 41, the fastening portion 12B as the third case-upper fastening portion fastened to the upper portion of the rear surface of the third case 43, and the fastening portion 12D as the third case-lower fastening portion fastened to the lower portion of the rear surface of the third case 43. Additionally, the high-voltage component 16 includes the fastening portion 16A as the second case-upper fastening portion fastened to the upper portion of the front surface of the second case 42, the fastening portion 16C as the second case-lower fastening portion fastened to the lower portion of the front surface of the second case 42, the fastening portion 16B as the fourth case-upper fastening portion fastened to the upper portion of the front surface of the fourth case 44, and the fastening portion 16D as the fourth case-lower fastening portion fastened to the lower portion of the front surface of the fourth case 44. Then, the fastening portion 16A as the second case-upper fastening portion and the fastening portion 16B as the fourth case-upper fastening portion are disposed in positions higher than the fastening portion 12A as the first case-upper fastening portion and the fastening portion 12B as the third case-upper fastening portion, and the fastening portion 16C as the second case-lower fastening portion and the fastening portion 16D as the fourth case-lower fastening portion are disposed in positions lower than the fastening portion 12C as the first case-lower fastening portion and the fastening portion 12D as the third case-lower fastening portion.

With this configuration, the fastening positions of the rear bracket 12 and the high-voltage component 16 to the case 40 are asymmetrical in the up-down direction and the vehicle width direction, so that stress acting on the case 40 can be distributed by the weight and inertia of the rear bracket 12 and the high-voltage component 16, and deformation and vibration of the case 40 due to stress concentration can be reduced. Moreover, since the fastening positions are asymmetrical, it is possible to reduce resonance of the case 40 with vibration generated in the rear bracket 12, the high-voltage component 16, and the motor 50.

Additionally, in the present example, the high-voltage component 16 and the rear bracket 12 are disposed in positions lower than the upper end of the driving device 30 to face each other in the front-rear direction with the driving device 30 interposed therebetween.

With this configuration, it is possible to arrange the center of gravity of the driving device 30 in the front-rear direction near the center of the case 40 and arrange the center of gravity of the driving device 30 in the up-down direction in a low position, whereby vibration of the case 40 due to deviation of the center of gravity in the front-rear direction can be reduced and vibration of the case 40 due to the center of gravity being arranged in a high position can be reduced.

While an example of the present invention has been disclosed, it is clear that a person skilled in the art could make modifications without departing from the scope of the present invention. All such modifications and equivalents are intended to be included in the following claims.

### [Reference Signs List]

1...vehicle, 2...vehicle body, 3...engine compartment, 12...rear bracket (bracket), 12A...fastening portion (first case-upper fastening portion), 12B... fastening portion (third case-upper fastening portion), 12C... fastening portion (first case-lower fastening portion), 12D...fastening portion (third case-lower fastening portion), 16... high-voltage component, 16A...fastening portion (second case-upper fastening portion), 16B... fastening portion (fourth case-upper fastening portion), 16C...fastening portion (second case-lower fastening portion), 16D...fastening portion (fourth case-lower fastening portion), 30...driving device, 40...case, 41...first case, 42...second case, 43...third case, 44...fourth case, 50...motor, 51...motor output shaft, 57...bearing, 58... bearing

## Claims

1. An electric vehicle (1) comprising:
a driving device (30) disposed in an engine compartment (3) formed in a front portion of the vehicle, the driving device (30) being configured to generate a motor torque for traveling; and
a bracket (12) fixed to a rear surface of the driving device (30) and supporting the driving device (30) to a vehicle body (2), **characterized in that**:
a high-voltage component (16) is disposed on a front surface of the driving device (30);
the driving device (30) includes a split case (40), the split case (40) including a first case (41), a second case (42), a third case (43), and a fourth case (44) fastened to one another while being arranged side by side from one side to the other in a vehicle width direction;
the bracket (12) is fastened to a rear surface of the first case (41) and a rear surface of the third case (43); and
the high-voltage component (16) is fastened to a front surface of the second case (42) and a front surface of the fourth case (44).

2. The electric vehicle according to claim 1, **characterized in that**
the case (40) accommodates a motor (50) and a motor output shaft (51) extending in the vehicle width direction and outputting a motor torque of the motor (50), and
the second case (42) and the fourth case (44) are provided with a bearing supporting the motor output shaft (51) in a freely rotatable manner.

3. The electric vehicle according to claim 2, **characterized in that**:
the bracket (12) includes a first case-upper fastening portion (12A) fastened to an upper portion of the rear surface of the first case (41), a first case-lower fastening portion (12C) fastened to a lower portion of the rear surface of the first case (41), a third case-upper fastening portion (12B) fastened to an upper portion of the rear surface of the third case (43), and a third case-lower fastening portion (12D) fastened to a lower portion of the rear surface of the third case (43);
the high-voltage component (16) includes a second case-upper fastening portion (16A) fastened to an upper portion of the front surface of the second case (42), a second case-lower fastening portion (16C) fastened to a lower portion of the front surface of the second case (42), a fourth case-upper fastening portion (16B) fastened to an upper portion of the front surface of the fourth case (44), and a fourth case-lower fastening portion (16D) fastened to a lower portion of the front surface of the fourth case (44);
the second case-upper fastening portion (16A) and the fourth case-upper fastening portion (16B) are disposed in positions higher than the first case-upper fastening portion (12A) and the third case-upper fastening portion (12B); and
the second case-lower fastening portion (16C) and the fourth case-lower fastening portion (16D) are disposed in positions lower than the first case-lower fastening portion (12C) and the third case-lower fastening portion (12D).

4. The electric vehicle according to claim 3, **characterized in that** the high-voltage component (16) and the bracket (12) are disposed in positions lower than an upper end of the driving device (30) to face each other in a front-rear direction with the driving device (30) interposed therebetween.
